## Europäisches Patentamt
## European Patent Office
## Office européen des brevets

(19)

(11) Numéro de publication: **0 054 496**
**B1**

(12)

# FASCICULE DE BREVET EUROPEEN

(45) Date de publication du fascicule du brevet:
**08.08.84**

(51) Int. Cl.³: **F 16 D 55/224**

(21) Numéro de dépôt: **81401999.8**

(22) Date de dépôt: **15.12.81**

(54) Elément de verrouillage pour frein à disque à étrier coulissant et frein à disque comportant un tel élément de verrouillage.

(30) Priorité: **16.12.80 FR 8026657**

(43) Date de publication de la demande:
**23.06.82 Bulletin 82/25**

(45) Mention de la délivrance du brevet:
**08.08.84 Bulletin 84/32**

(84) Etats contractants désignés:
**DE GB IT SE**

(56) Documents cités:
**DE - B - 1 166 017**
**FR - A - 2 142 248**
**FR - A - 2 339 780**
**GB - A - 1 283 680**
**US - A - 3 402 789**

(73) Titulaire: **SOCIETE ANONYME D.B.A., Centre Paris Pleyel, F-93521 St-Denis Cédex 01 (FR)**

(72) Inventeur: **Denree, Michel, 10, Place Pluton, F-93600 Aulnay sous Bois (FR)**

(74) Mandataire: **Poidatz, Emmanuel et al, Service Brevets Bendix 44 rue François 1er, F-75008 Paris (FR)**

BUNDESDRUCKEREI BERLIN

## Description

L'invention concerne une épingle à ressort de verrouillage d'étrier de frein à disque selon le préambule de la revendication.

On connaît de FR-A-2 142 248 une épingle pour un frein à disque du type défini ci-dessus dans lequel deux colonnettes axiales fixées sur le support fixe traversent des alésages prévus en vis à vis dans l'étrier, des manchons de coulissement de protection étant montés dans les alésages pour coopérer avec les colonnettes. Le manchons sont solidarisés à l'étrier au moyen d'épingles prenant appui par une de leur extrémité sur l'étrier et l'autre extrémité passant par des rainures formées d'une part sur l'étrier et d'autre part sur le manchon. Dans ce type de frein, des interventions telles que le changement d'un piston, d'un joint de piston et en particulier le changement des éléments de friction conduisent à basculer l'étrier après avoir enlevé une épingle et un des manchons. A l'occasion de ces interventions l'épingle de verrouillage du manchon peut être endommagée ou déformée; l'épingle pourrait alors se détacher de l'étrier. Le manchon qui n'est plus immobilisé axialement est susceptible de coulisser hors de l'alésage correspondant de l'étrier; ce dernier n'étant plus tenu est susceptible de se désolidariser du support fixe et de provoquer des dommages au véhicule lui faisant perdre tout ou partie de son freinage.

Le document GB-A-1 283 680 enseigne d'utiliser une épingle d'immobilisation d'axe de tenue de patins comportant une portion en U destinée à éviter le déplacement axial de l'axe et de l'épingle, néanmoins la tenue de l'épingle sur l'axe n'est assurée que par la portion coopérant élastiquement avec la surface extérieure de celui-ci et une simple traction radiale sur l'épingle permet le démontage de celle-ci avec le risque de détérioration ou de déformation qu'n'assurera pas un verrouillage ultérieur correct.

Le document FR-A-2 339 780, dans le cadre d'un ressort évitant le bruit entre étrier mobile et support fixe, montre un ressort comportant des portions hélicoïdales qui assurent une grande flexibilité des extrémité des ressorts.

L'invention a pour objet une épingle à ressort de verrouillage pour étrier de frein à disque du type décrit ci-dessus comportant une portion de verrouillage du manchon et une portion d'immobilisation de l'épingle de manière à ce que celle-ci ne puisse être extraite simplement par traction sensiblement radiale, ces deux portions étant reliées d'une manière limitant les risques de détérioration ou de déformation.

Dans ce but, l'invention propose une épingle à ressort de verrouillage d'étrier de frein à disque monté coulissant sur un support fixe comportant deux éléments de friction reçus en ancrage et en coulissement dans ledit support fixe et susceptible de venir en engagement de friction avec les faces opposées d'un disque tournant lors de la mise en oeuvre d'un moteur de frein agissant directement sur l'un des éléments de friction et agissant sur l'autre élément de friction par réaction au travers de l'étrier coulissant, au moins une colonnette axiale de coulissement solidaire du support fixe et recevant en coulissement un alésage correspondant formé dans l'étrier, ladite colonnette coopérant avec l'alésage correspondant au moyen d'un manchon immobilisé axialement dans ledit alésage au moyen de ladite épingle de verrouillage passant par un perçage et une gorge prévus dans ledit alésage et dans ledit manchon, caractérisé en ce que ladite épingle à ressort de verrouillage est immobilisée positivement par rapport audit étrier au moyen d'une portion en forme de U de ladite épingle de verrouillage, ladite portion en forme de U étant reliée à la portion de verrouillage au moyen d'une portion élastique formée par une portion hélicoïdale travaillant en enroulement élastique et en ce que, d'une part, la partie centrale du U est en appui sur une surface correspondante de l'étrier et, d'autre part, l'autre des deux branches du U coopère axialement avec une surface de butée correspondante de l'étrier pour s'opposer à l'échappement accidentel de l'épingle de verrouillage, l'une des branches de la portion en U étant reliée à la portion élastique.

Il apparaît ainsi que grâce à l'invention le verrouillage du manchon au moyen de l'épingle de verrouillage est rendu fiable grâce à l'immobilisation positive de cet élément de verrouillage par rapport à l'étrier, et comme il apparaîtra à la lumière de la description qui va suivre, les risques de déformation de l'épingle de verrouillage sont considérablement réduits.

On décrira maintenant à titre d'exemple non limitatif un mode de réalisation préféré de l'invention, en se référant aux figures annexées dans lesquelles:

— la fig. 1 est une vue en bout d'un frein à disque dont une moitié est représentée en coupe transversale, et qui comporte l'épingle de verrouillage objet de l'invention;

— la fig. 2 est une de dessus en coupe du frein représenté à la fig. 1 montrant les phases d'assemblage du frein;

— la fig. 3 est une vue en bout du frein à disque de la fig. 1 montrant les phases d'assemblage du frein;

— la fig. 4 est une coupe selon la ligne I-I de la fig. 1 montrant l'accrochage de l'épingle de verrouillage;

— la fig. 5 est une vue en bout agrandie de l'épingle de verrouillage objet de l'invention;

— la fig. 6 est une vue de côté agrandie de l'épingle de verrouillage de la fig. 5.

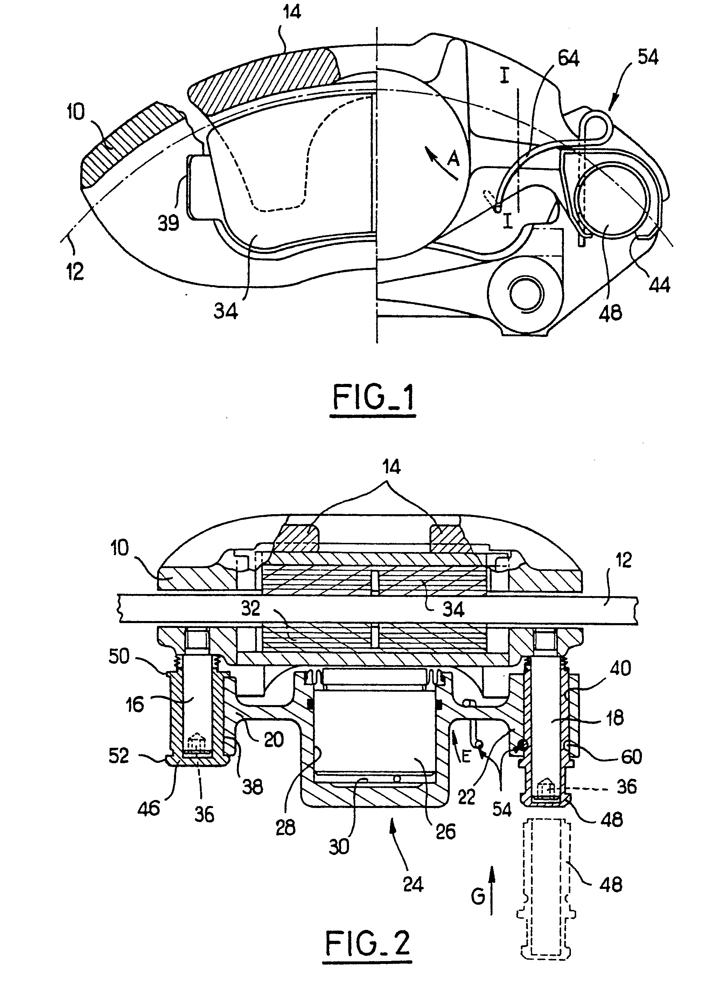

Le frein à disque représenté sur les fig. 1 à 3 comporte un organe support 10 prévu pour être associé à une partie fixe du véhicule (non représenté) et constitué dans le mode de réalisation représenté par une plaque disposée au voisinage d'un disque 12 prévu pour être associé en rotation à une roue du véhicule (non représentée). Le support fixe 10 reçoit en coulissement, au moyen de deux colonnettes axiales circonférenciellement espacées 16 et 18, un étrier mobile 14 chevauchant le disque. Les axes des colonnettes 16 et 18 sont sensiblement parallèles à l'axe de rotation du disque 12 et les colonnettes 16 et 18 sont disposées entre le support fixe 10 et des bras 20 et 22 définis dans l'étrier 14. L'étrier 14 comporte des moyens d'actionnement 24 constitués par un moteur de frein hydraulique (voir fig. 2) comprenant un piston 26 monté coulissant dans un alésage 28 défini dans l'étrier 14 et sensible à la pression régnant dans une chambre de commande 30 susceptible d'être reliée à une source de pression telle que par exemple, le maître cylindre du véhicule (non représenté). Le piston 26 est disposé de façon à solliciter directement un premier élément de friction 32 contre une première face du disque 12 lorsque le fluide sous pression est admis dans la chambre 30. L'étrier 14 est susceptible de se déplacer par réaction au travers de l'étrier 14 entraînant le coulissement de ce dernier sur les colonnettes 16 et 18 afin de solliciter un second élément de friction 34 contre l'autre face du disque 12. Comme le montre en particulier la fig. 1, l'élément de friction 34 est supporté en coulissement et en ancrage par des bords circonférenciellement espacés 39 d'une ouverture ménagée dans le support fixe 10. D'une manière identique l'élément de friction 32 est également reçu en ancrage et en coulissement sur le support fixe 10.

Comme le montre plus particulièrement la fig. 2, les deux colonnettes 16 et 18 sont associées au support fixe 10 par une liaison filetée. Plus précisément les colonnettes 16 et 18 qui permettent le mouvement de coulissement de l'étrier 14 sont montées vissées sur ledit support fixe. Dans l'exemple représenté, chacune des colonnettes est munie d'une tête dans laquelle est formée une tête de vis à six pans creux 36 permettant de fixer les colonnettes à l'aide d'une clé correspondante (non représentée).

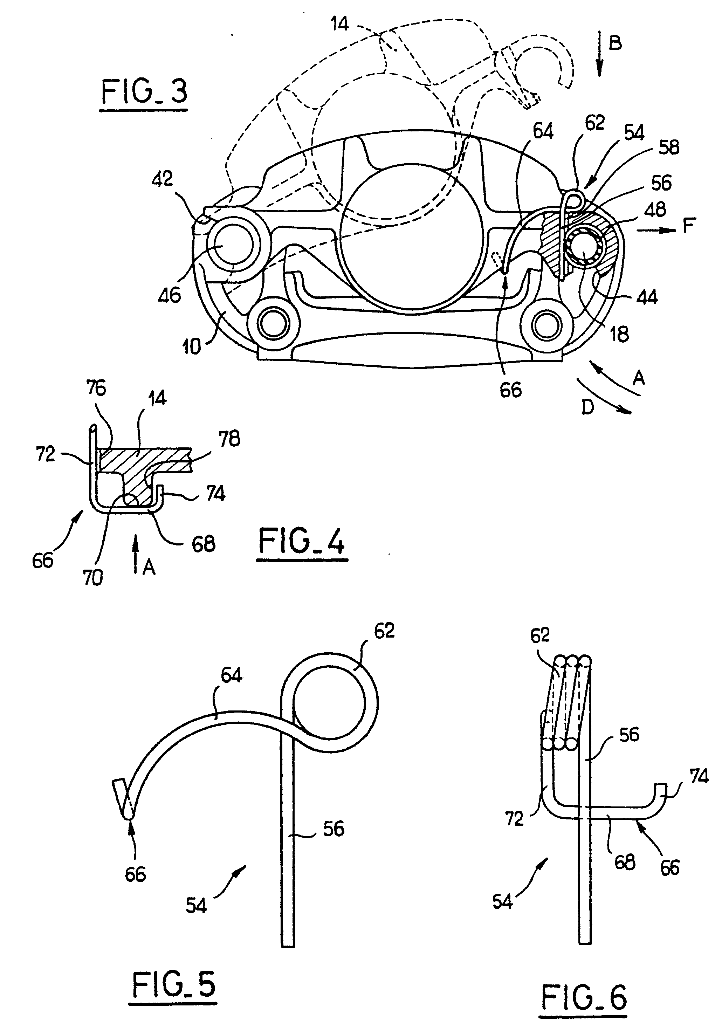

Les bras 20 et 22 de l'étrier 14 sont munis d'alésages 38 et 40 dans lesquels sont enfilées les colonnettes 16 et 18 respectivement. Les alésages 38 et 40 sont munis chacun d'une échancrure, 42 et 44 respectivement (voir fig. 3), de telle façon que les deux alésages 38 et 40 présentent en section transversale la forme d'un C.

En considérant la fig. 3, l'échancrure 42 est dirigée sensiblement parallèlement aux plans passant par les axes des colonnettes 16 et 18 et s'ouvre vers l'extérieur du frein. L'échancrure 44 est dirigée sensiblement perpendiculairement au plan défini ci-dessus et s'ouvre verticalement vers le bas.

En se reportant aux fig. 1, 2, 3, on voit que les colonnettes 16 et 18 sont pourvues chacune d'un manchon cylindrique respectivement 46 et 48, fermé à une extrémité et enfilé sur la colonnette correspondante. Le manchon 46 coopère avec la colonnette 16 et est rendu solidaire du bras 20 de l'étrier 14 au moyen de deux épaulements 50 et 52 venant immobiliser le manchon 46 par rapport au bras 20.

Conformément à l'invention, le manchon 48 monté sur la colonnette 18 est rendu solidaire du bras 22 de l'étrier 14 au moyen d'un ressort de verrouillage 54 formant épingle à ressort de verrouillage dont une portion rectiligne 56 est monté dans un perçage 58 formé dans le bras 22 de l'étrier 14. La portion rectiligne 56 coopère par sa partie centrale avec une gorge 60 formée sur la surface cylindrique extérieure du manchon 48. Outre la portion rectiligne de verrouillage, le ressort de verrouillage 54 comporte une portion 62 formée d'un enroulement hélicoïdal relié d'une part à la portion rectiligne 56 et d'autre part au moyen d'une portion 64 à une portion en U 66 qui immobilise le ressort 54 par rapport à l'étrier 14. Comme on le voit plus particulièrement sur la fig. 4, la portion en U 66 comporte une partie centrale 68 maintenue en contact avec une surface 70 de l'étrier 14 au moyen de l'enroulement hélicoïdal 62, qui sollicite cette partie 68 dans le sens de la flèche A. Outre la partie centrale 68 la portion en U 66 comporte deux branches 72 et 74 susceptibles de venir en appui respectivement sur des surfaces 76 et 78 formées sur l'étrier 14. Ces deux branches 72 et 74 immobilisent axialement le ressort 54 par rapport à l'étrier.

Les fig. 5 et 6 montrent le ressort 54 avant son montage sur le frein.

L'opération de montage de l'étrier 14 sur le support fixe 10 s'effectue de la façon suivante (voir fig. 2 et 3):

Les deux colonnettes 16 et 18 étant déjà fixées sur le support fixe 10, on vient enfiler le manchon 46 sur la colonnette 16. On présente ensuite l'étrier 14 pour engager l'échancrure 42 sur le manchon 46 en prenant soin de réaliser un positionnement correct du bras 20 par rapport aux épaulements 50 et 52 du manchon 46. On bascule l'étrier 14 suivant la flèche B, sur le support 10 en le faisant pivoter autour de la colonnette 16, ce qui a pour effet d'engager la colonnette 18 dans l'échancrure verticale 44 de l'alésage 40 formé sur le bras 22. En positionnant la colonnette 18 et l'alésage 40 sensiblement de façon coaxiale, et en maintenant cette position on vient enfiler axialement le manchon de coulissement et de verrouillage 48 (suivant la flèche G de la fig. 2). On procède alors au montage du ressort de verrouillage 54. Pour cela on introduit dans le sens de la flèche B, la portion rectiligne 56 dans le perçage 58 formé dans l'étrier 14 et dans la gorge 60 de la bague 48. On exerce alors une torsion suivant la flèche D sur la portion en U 66 du ressort 54. Lorsque la branche 74 de la portion en U 66 est susceptible de passer en dessous de la surface 70 formée dans l'étrier, on fait pivoter le ressort 54 dans le sens de la flèche E jusqu'à ce que la branche 72 vienne en appui sur la surface 76 de l'étrier 14. En relachant la torsion, le ressort 54 se met en place suivant la flèche A, la partie centrale 68 vient an appui sur la surface 70 de l'étrier 14 et la branche 74 vient en vis à vis de la surface 78 de l'étrier, ce qui interdit l'échappement par rapport à l'étrier de la portion en U 66.

Le ressort 54 est donc ainsi verrouillé sur l'étrier 14.

Comme on le voit plus particulièrement sur la fig. 3, la portion rectiligne 56 du ressort 54 prend appui d'une part sur le perçage 58 et d'autre part par sa partie centrale sur le manchon 48, ceci maintient le manchon 48 en contact avec le bras 22 de l'étrier 14 dans le sens de la flèche F ce qui permet de rattraper les jeux et les tolérances de fabrication pouvant exister entre le manchon 48 et l'alésage 40, le ressort 54 faisant ainsi office de ressort antibruit de bague.

Le démontage du frein s'effectue dans l'ordre inverse des opérations qui viennent d'être décrites.

Il apparaît donc, à la lecture de ce qui précède, que le ressort 54 verrouille la bague 48 et est immobilisé positivement par rapport à l'étrier 14 au moyen de la portion en U 66, les différents démontages ne peuvent endommager le ressort et son verrouillage du fait de la portion hélicoïdale 62 dont l'élasticité est suffisante pour faire face à toutes les manoeuvres nécessaires au montage et au démontage de ce ressort 54. Il apparaît également que ce ressort fait office de ressort anti-bruit pour la bague 48.

**Revendication**

Epingle à ressort de verrouillage (54) d'étrier (14) de frein à disque monté coulissant sur un support fixe (10) comportant deux éléments de friction (32, 34) reçus en ancrage et en coulissement dans ledit support fixe (10) et susceptible de venir en engagement de friction avec les faces opposées d'un disque tournant (12) lors de la mise en oeuvre d'un moteur de frein (24) agissant directement sur l'un des éléments de friction (32) et agissant sur l'autre élément de friction (34) par réaction au travers de l'étrier coulissant (14), au moins une colonnette axiale (18) de coulissement solidaire du support fixe (10) et recevant en coulissement un alésage (40) correspondant formé dans l'étrier (14), ladite colonnette (18) coopérant avec l'alésage (40) correspondant au moyen d'un manchon (48) immobilisé axialement dans ledit alésage (40) au moyen d'une portion de verrouillage de ladite épingle de verrouillage (54) passant par un perçage (58) et une gorge (60) prévus dans ledit alésage (40) et dans ledit manchon (48), caractérisée en ce que ladite épingle à ressort de verrouillage (54) est immobilisée positivement par rapport audit étrier au moyen d'une portion (66) en forme de U de ladite épingle de verrouillage (54), ladite portion (66) en forme de U étant reliée à la portion de verrouillage (56) au moyen d'une portion élastique (62) formée par une portion hélicoïdale travaillant en enroulement élastique et, en ce que, d'une part, la partie centrale du U est en appui sur une surface (70) correspondante de l'étrier (14) et, d'autre part, l'autre (74) des deux branches du U coopère axialement avec une surface de butée (78) correspondante de l'étrier (14) pour s'opposer à l'échappement accidentel de l'épingle de verrouillage (54), l'une (72) des branches de la portion en U étant reliée à la portion élastique (62).

**Patentanspruch**

Drahtförmige Verriegelungsfeder (54) für eine Schwimmsattel-Scheibenbremse, deren Schwimmsattel (14) auf einem festgelegten Bremsträger (10) gleitet, wobei zwei Reibelemente (32, 34) auf dem Bremsträger (10) gleitbar gelagert sind und mit den gegenüberliegenden Seitenflächen einer umlaufenden Scheibe (12) bei Betätigung einer Bremsbetätigungsvorrichtung (24) in Reibanlage bewegbar sind, wobei die Bremsbetätigungsvorrichtung auf eines der Reibelemente (32) unmittelbar und auf das andere Reibelement (34) durch Reaktion über den Schwimmsattel (14) einwirkt, wobei mindestens ein gleitender axialer Kolben (18) mit dem Bremsträger (10) fest verbunden ist und in einer entsprechenden Bohrung (40) des Schwimmsattels (14) gleitend sitzt und mit der Bohrung (40) über eine Hülse (48) zusammenwirkt, die in der Bohrung (40) mittels eines Verriegelungsabschnittes der Verriegelungsfeder (54) axial festgelegt ist, die durch ein Loch (58) und eine Ringnut (60) in der Bohrung (40) sowie der Hülse (48) verläuft, dadurch gekennzeichnet, daß die Verriegelungsfeder (54) bezüglich des Schwimmsattels mittels eines U-förmigen Abschnittes (66) der Verriegelungsfeder (54) formschlüssig festgelegt ist, wobei der U-förmige Abschnitt (66) mit dem Verriegelungsabschnitt (56) mittels eines elastischen Abschnittes (62) verbunden ist, der durch einen elastisch gewickelten schraubenförmigen Abschnitt gebildet wird, und daß ein Schenkel (72) des U-förmigen Abschnittes mit dem elastischen Abschnitt (62) verbunden ist und daß einerseits der zentrale Abschnitt des U an einer entsprechenden Fläche (70) des Schwimmsattels (14) anliegt und andererseits der andere Schenkel (74) des U axial mit einer entsprechenden Anschlagfläche (78) des Schwimmsattels (14) zusammenwirkt, um ein unbeabsichtigtes Lösen der Verriegelungsfeder (54) zu verhindern.

**Claim**

A locking wire spring (54) for a disk brake caliper (14) slidingly mounted upon a fixed support (10) comprising a pair of friction elements (32, 34) anchored and slidingly received in said fixed support (10) and adapted to frictionally engage the opposite faces of a rotating disk (12) upon operation of a brake motor (24) acting directly upon one of said friction elements (32) and acting upon the other friction element (34) by reaction via the sliding caliper (14), at least one sliding axial column (18) fixed to said fixed support (10) and slidingly receiving a corresponding bore (40) formed in the caliper (14), said column (18) cooperating with the corresponding bore (40) by means of a sleeve (48) secured against axial movement in said bore (40) by means of a locking portion of said locking spring (54) passing through a passage (58) and throat (60) provided in said bore (40) and said sleeve (48), characterized in that said locking spring (54) is positively prevented from any movement with respect to said caliper by means of a U-shaped portion (66) of said locking spring (54), said U-shaped portion (66) being connected to the locking portion (56) by means of a resilient portion (62) formed by a resiliently wound helical portion, and in that, on the one hand, the central portion of the U abuts a corresponding surface (70) of the caliper (14) and on the other hand the other (74) of the two branches of the U axially cooperates with a corresponding abutment surface (78) of the caliper (14) in order to prevent an accidental escape of the locking spring (54), the one (72) of the branches of the U portion being connected to the resilient portion (62).

FIG_1

FIG_2

FIG_3

FIG_4

FIG_5

FIG_6